# EUROPEAN PATENT APPLICATION

(11) **EP 3 981 724 A1**
(43) Date of publication of application: **13.04.2022**
(21) Application number: 20200206.9
(22) Date of filing: 06.10.2020
(51) Int. Cl.: B66B 11/04, H02K 41/03

(54) **A LINEAR MOTOR CONVEYOR SYSTEM AND A METHOD FOR CONTROLLING A LINEAR MOTOR CONVEYOR SYSTEM**

(71) Applicant: KONE Corporation, 00330 Helsinki (FI)
(72) Inventor: KORHONEN, Tuukka, 00330 HELSINKI (FI); HAKALA, Tero, 00330 HELSINKI (FI); RAASSINA, Pasi, 00330 HELSINKI (FI)
(74) Representative: Berggren Oy

(57) **Abstract**

A linear motor conveyor system and a method for controlling a linear motor conveyor system, the system comprising a conveyor shaft (101), at least one movable unit (102), such as an elevator car or a motor unit, an electric linear motor for moving the movable unit comprising at least one linear stator (104) extending in the conveyor shaft, and at least one mover (106) coupled to the movable unit (102) and configured to be moved along the linear stator. The linear stator (104) comprises stator poles implemented without windings, e.g. permanent magnet poles and/or ferromagnetic poles, and the mover (106) comprises power components and/or windings for interacting with the stator poles to generate propulsion force for moving the movable unit (102) along the linear stator (104).

## Description

### Technical Field

The invention concerns in general the technical field of conveyor systems. Especially the invention concerns linear motor conveyor systems.

### Background

At the present time, the elevators utilizing electric linear motor systems are being developed. These elevators can be used e.g. in multicar elevator system in which a plurality of elevator cars travel within the same elevator shafts. The movement of the elevator car is produced in these kind of systems by a mover in electromagnetic engagement with a stator of the linear motor system. In the known prior art systems, the mover comprises permanent magnets and the stator comprises windings or coils for generating propulsion force to the mover and elevator car. Therefore, stator with windings is arranged in fixed manner along the entire elevator shaft. Plurality of high-power components, such as frequency converters are arranged along the stator and connected to the respective stator windings, to generate power signals for driving the mover and the elevator car.

Presence of the high-power components and the stator windings along the entire shaft means that many requirements are set for electrical safety in the shaft. In practice, entire shaft must be designed to fulfil electrical safety requirements traditionally used with small-sized electrical cabinets.

The electrical safety requirements, such as waterproofness, non-access from outside, earthings and protection from electrical shock increase complexity and cost of elevators.

### Summary

The following presents a simplified summary in order to provide basic understanding of some aspects of various invention embodiments. The summary is not an extensive overview of the invention. It is neither intended to identify key or critical elements of the invention nor to delineate the scope of the invention.

The following summary merely presents some concepts of the invention in a simplified form as a prelude to a more detailed description of exemplifying embodiments of the invention.

The objective of the present invention is to solve at least partially one or more of the above-recited problems. In particular, the present invention introduces a linear motor-propelled elevator system with is simpler and more cost-effective than above-mentioned systems.

According to a first aspect, the invention relates to a linear motor conveyor system, which comprises a conveyor shaft, at least one movable unit, such as an elevator car or a motor unit and an electric linear motor for moving the movable unit comprising at least one linear stator extending in the conveyor shaft and at least one mover coupled to the movable unit and configured to be moved along the linear stator. The linear stator comprises stator poles implemented without windings, e.g. permanent magnet poles and/or ferromagnetic poles, and the mover comprises power components and/or windings for interacting with the stator poles to generate propulsion force for moving the movable unit along the linear stator.

In one embodiment of the invention the linear stator does not comprise windings or power components of the electric linear motor.

In one embodiment of the invention the mover comprises a drive unit, such as a frequency converter, for driving the mover along the stator, and/or wherein the drive unit comprises an inverter for generating power signals to the windings of the mover and/or a battery.

In one embodiment of the invention the linear stator comprises permanent magnet poles e.g. in the form of halbach arrays. In one embodiment of the invention the linear stator comprises ferromagnetic poles.

In one embodiment of the invention the conveyor shaft or at least a section of the conveyor shaft comprises a non-closed section in which the conveyor shaft is open or at least partially open to surroundings of the conveyor shaft or the conveyor shaft section.

In one embodiment of the invention the linear stator or a part of the linear stator, e.g. in the non-closed section of the conveyor shaft, is coated in such a way that it is protected against outdoor conditions.

In one embodiment of the invention at least a part of the movable unit and movers of the movable units are arranged to be essentially waterproof, and/or wherein the essentially waterproof movable units and their movers are configured to be allocated for trips containing movement in a non-closed section of the conveyor shaft.

In one embodiment of the invention the linear stator comprises a first linear stator extending in a in a first direction of the conveyor shaft, and a second linear stator extending in a second direction of the conveyor shaft, wherein the first direction and the second direction are different directions, selected from the group of horizontal, inclined and vertical direction.

In one embodiment of the invention the conveyor shaft or a conveyor shaft section extends between two buildings, in particular in horizontal or inclined direction, comprising a non-closed section for transferring movable units between the two buildings.

In one embodiment of the invention the movable unit, e.g. the drive unit of the movable unit, comprises a movement sensor of movable unit configured to regulate speed of the car and/or to detect an over-speed of the car.

In one embodiment of the invention the conveyor shaft or a section of the conveyor shaft, such as a non-closed section of the conveyor shaft, comprises a cover.

In one embodiment of the invention the linear motor conveyor system is an elevator system comprising an elevator shaft and an elevator car configured to move in the elevator shaft.

According to a second aspect the invention relates to a method for controlling a linear motor conveyor system, wherein a part of the movable units and their movers are arranged to be essentially waterproof. In the method the essentially waterproof movable units and their movers are allocated for trips containing movement in a non-closed section of the conveyor shaft.

According to a third aspect the invention relates to a computer program comprising instructions which, when executed by a computer, cause the computer to carry out the method according to the invention.

According to a fourth aspect the invention relates to a computer-readable medium comprising the computer program according to the invention.

The above described conveyor system and method for controlling the conveyor system provide advantages compared to prior art solutions. With the solution of the invention it's possible to provide a simple and cost-efficient structure and conveyor system which can be used also to transfer moving units outdoors as there are no stator windings or power components in connection with the linear stator rails. Instead of that the power components and/or windings are provided in the mover. That way there are not many electrical components that should be protected or covered in the conveyor shaft of the conveyor system unlike in the prior art systems. This is very useful construction for example in environments where there is a need to transfer between buildings or for example at airports.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the Figures

The embodiments of the invention are illustrated by way of example, and not by way of limitation, in the figures of the accompanying drawings:
- Figure 1: illustrates schematically a conveyor system according to one embodiment of the present invention, and
- Figure 2: illustrates schematically a conveyor system according to one embodiment of the present invention.

### Description of the exemplifying embodiments

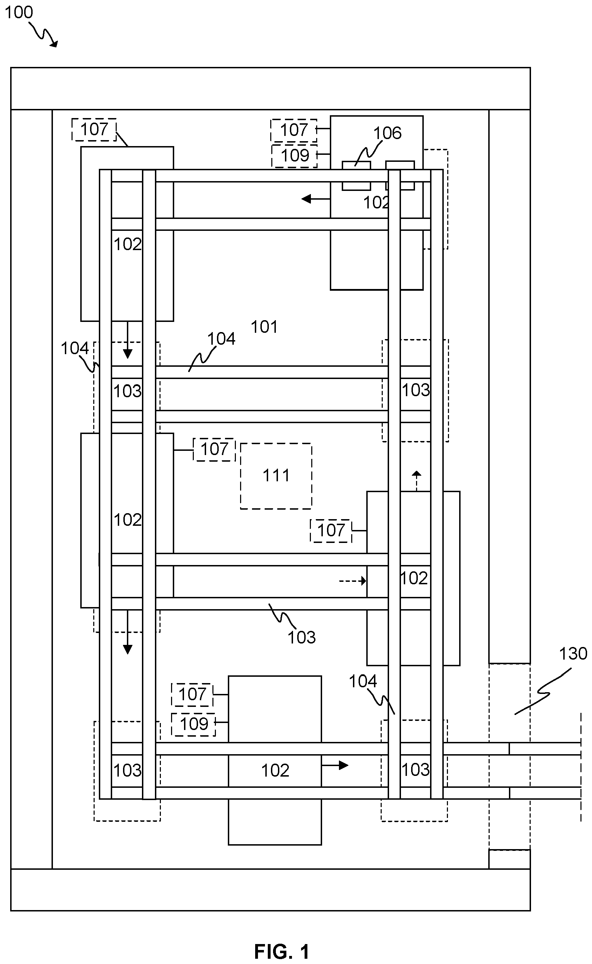

The present invention relates to a linear motor conveyor system. The linear motor conveyor system can be an elevator system comprising an elevator shaft and an elevator car configured to move in the elevator shaft. An example of such system is presented in Figure 1 which illustrates schematically an elevator 100 according to an embodiment of the present invention in which the solution of the invention can be used. The elevator 100 may comprise at least one or a plurality of movable units 102, such as elevator cars or motor units, moving in the elevator shaft 101 or the elevator car pathway 101.

The movable unit according to the present invention may refer, for example, to an elevator car which is arranged to be moved by a mover 106 or movers 106 of an electric linear motor of the elevator 100 in the elevator shaft 101. However, alternatively, the movable unit(s) 102 may refer to a motor unit. The motor unit may be, in some embodiments, the mover 106 of the electric linear motor which may be moved as such in the elevator shaft 101. The motor unit may also comprise electrical power providing means for providing electrical power to the mover 106, such as from an energy storage 109, for example, a battery or batteries. Furthermore, the motor unit may comprise a controller for controlling the movement. The elevator car, or specifically the "cage" into which the passengers enter, may then be removably coupled to the motor unit for moving the elevator car. However, in various embodiments, the motor unit may be arranged to be moved in the elevator shaft 101 and along the linear stator 104 independently of the elevator car. The movable unit, e.g. the drive unit of the movable unit can comprise a movement sensor of movable unit configured to regulate speed of the car and/or to detect an overspeed of the car.

The movable unit(s) 102 or movers 106 may comprise an electrical converter unit 107, comprising e.g. a frequency converter or an inverter, and/or a first energy storage 109 such as a battery or batteries. The electrical converter unit 107 may be utilized for operating a mover 106 arranged to the movable unit 102, for moving the unit 102 along the elevator shaft 101. There may also be other electrically operated equipment in the movable unit 102, such as lighting, doors, user interface, emergency rescue equipment, etc. The electrical converter unit 107 or a further electrical converter, such as an inverter or a rectifier, may be utilized for operating one or several of said other equipment of the movable unit 102. The first energy storage 109 may be electrically coupled to the electrical converter unit 107, for example, to the intermediate circuit of the converter therein, for providing electrical power to the electrical converter unit 107 and/or for storing electrical energy provided by the first electrical converter unit 107 or a further electrical converter or other electrical power source.

There are preferably at least two landing floors, having landing floor doors 3 or openings 103, comprised in the elevator 100. There may also be doors comprised in the movable units 102. Although shown in Fig. 1 that there are two horizontally separated sets, or "columns", of vertically aligned landing floors, there could as well be only one column as in conventional elevators or more than two, for example, three, or basically any number of vertical and/or horizontal, or having any other direction, shaft portions.

As can be seen in Fig. 1, the movable unit 102 or units 102 may be moved along the elevator shaft 1 vertically and/or horizontally depending on the direction of linear stators 104, such as stator beams. According to embodiments similar to one in Fig. 1 in this respect, the movable unit 102 or units 102 may be configured to be moved along at least one vertical 4 and/or horizontal linear stator 104, for example two beams such as in Fig. 1. The linear stators 104 are part of an electric linear motor of the elevator 100 utilized to move the movable unit 102 or units 102 in the elevator shaft 101. The linear stators 104 may, preferably, be arranged in fixed manner, that is, stationary with respect to the elevator shaft 101, for example, to a wall of the shaft by fastening portions, which may be arranged to rotatable at direction changing positions of the movable unit 102.

The conveyor system according to the present invention may further comprise one or more reservation shafts into which one or more moving units may be instructed. The one or more reservation shafts may be used for example to store one or more moving units which are not operating properly, i.e. there is a malfunction in the one or more moving units cars, for bypassing a moving unit not operating properly, to store extra, e.g. idle moving units, and/or to be able to move more moving units to serve in the other direction e.g. during a traffic peak. The reservation shaft may be vertical or a horizontal channel, for example.

In the solution of the invention the linear stator comprises stator poles implemented without windings, e.g. permanent magnet poles, for example in the form of halbach arrays, and/or ferromagnetic poles. In one embodiment of the invention the linear stator does not comprise power components of the electric linear motor, but the linear stator comprises ferromagnetic poles and/or permanent magnet poles. The linear stator can for example comprise a first linear stator extending in a in a first direction of the conveyor shaft, and a second linear stator extending in a second direction of the conveyor shaft, wherein the first direction and the second direction are different directions, selected from the group of horizontal, inclined and vertical direction. The mover comprises power components and/or windings for interacting with the stator poles to generate propulsion force for moving the movable unit along the linear stator. The mover can comprise a drive unit, e.g. a frequency converter, for driving the mover along the stator. The drive unit can comprise an inverter for generating power signals to the windings of the mover. The mover can be fixed for example to an elevator car or car sling, if any.

Regarding the elevator shaft 101, it may be such that it defines a substantially closed volume in which the movable unit 102, such as an elevator car, is adapted and configured to be moved. The walls may be, for example, of concrete, metal or at least partly of glass, or any combination thereof. The elevator shaft 101 herein refers basically to any structure or pathway along which the movable unit 102, such as an elevator car, is configured to be moved. The structure defining the elevator shaft may also comprise an opening 130 through which the mover can travel outside the elevator shaft, e.g. to other building. This part of the system outside the elevator shaft and/or between different elevator shafts can be referred as a transfer section or as non-closed section.

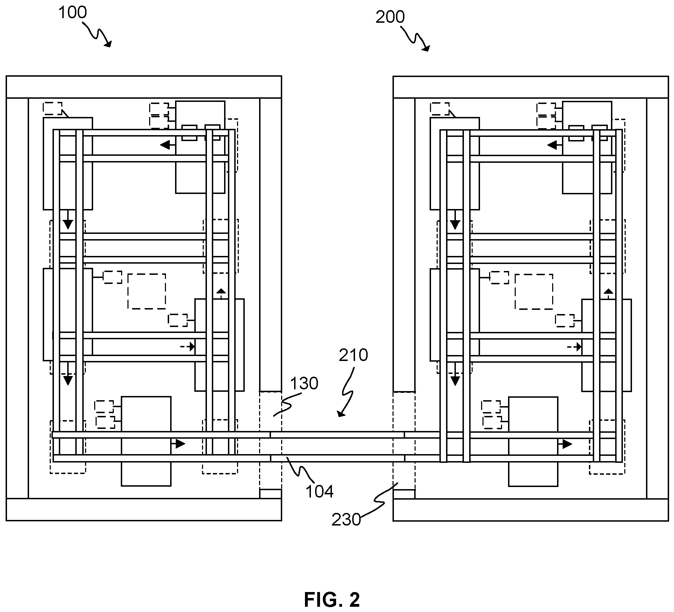

One example embodiment is presented in Fig. 2 which presents two elevators 100, 200 which comprise shafts comprising openings 130, 230 through which the moving unit can travel between elevators and the elevator shafts of the elevators. In the example of Figure 2 the elevator 200 is essentially similar elevator as elevator 100. The conveyor shaft or at least a section of the conveyor shaft can comprise a horizontal non-closed section 210 in which the conveyor shaft is open or at least partially open to surroundings of the conveyor shaft or the conveyor shaft section. In one embodiment of the invention, as in Figure 2, the conveyor shaft extends between two buildings and comprises a non-closed section 210 at ground level for transferring movable units between the two buildings. This section can be referred in one embodiment of the invention as a transfer section.

The linear stator or a part of the linear stator, e.g. in the non-closed section of the conveyor shaft, can be coated in such a way that it is protected against outdoor conditions. In an embodiment which utilizes ferromagnetic poles the coating can be formed from non-conductive materials comprising plastic and/or ceramic material. In an embodiment which utilizes permanent magnet poles resistance against corrosion can be improved by using specific types of permanent magnet material, such as Dy diffusion-based material. In one embodiment of the invention epoxy resin may be used as coating material for linear stator.

In one embodiment of the invention the conveyor shaft or a section of the conveyor shaft, such as a non-closed section of the conveyor shaft, can comprise a cover.

In one embodiment of the invention at least a part of the movable units and movers of these movable units are arranged to be essentially waterproof. The essentially waterproof movable units and their movers can be allocated for trips containing movement in a non-closed section of the conveyor shaft.

The conveyor such as the elevator 100 of the figure 1 may comprise a conveyor control unit 111, such as an elevator control unit, for controlling the operation of the elevator 100. The conveyor control unit 111 may be a separate device or may be comprised in the other components of the elevator 100 such as in or as a part of the electrical drive 107. The conveyor control unit 111 may also be implemented in a distributed manner so that, e.g., one portion of the conveyor control unit 111 may be comprised in the electrical drive 107 and another portion in the movable unit 102, such as in an elevator car. The elevator control unit 111 may also be arranged in distributed manner at more than two locations or in more than two devices whereas the elevator 100 may comprise electrical and/or data connections between the control unit 111 and various other elements of the elevator 100, and/or connections between different portions of the conveyor control unit 111 for enabling controlling the operation of the elevator 100.

The conveyor control unit 111 may comprise a processing unit comprising one or more processors, a memory unit comprising one or more memories, a communication unit comprising one or more communication devices, and a user interface (UI). The mentioned elements of may be communicatively coupled to each other with e.g. an internal bus. The one or more processors of the processing unit may be any suitable processor for processing information and controlling the operation of the conveyor control unit, among other tasks. The memory unit may store portions of computer program code and any other data, and the processing unit may cause the conveyor control unit to operate as described by executing at least some portions of the computer program code stored in the memory unit. Furthermore, the one or more memories of the memory unit may be volatile or non-volatile. Moreover, the one or more memories are not limited to a certain type of memory only, but any memory type suitable for storing the described pieces of information may be applied in the context of the invention. The communication unit may be based on at least one known communication technologies, either wired or wireless, in order to exchange pieces of information as described earlier. The communication unit provides an interface for communication with any entities of the multicar elevator system, such as the operational entity, or any external units, such as database and/or any external systems. The user interface may comprise input/output (I/O) devices, such as buttons, keyboard, touch screen, microphone, loudspeaker, display and so on, for receiving input and outputting information.

The processor of the conveyor control unit 111 may be configured to implement at least various tasks of the conveyor, such as an elevator. The implementation of the tasks may be achieved by arranging the processor to execute at least some portion of computer program code stored in the memory causing the processor, and thus the conveyor control unit 111, to implement the tasks. The processor may thus be arranged to access the memory and retrieve and store any information therefrom and thereto. In one embodiment of the invention at least part of the operations may also be implemented with a microcontroller solution with embedded software.

In one embodiment of the invention in which at least a part of, in particular a subset of the movable units and their movers are configured to be essentially waterproof, the conveyor control unit can control the system so that the essentially waterproof movable units and their movers are allocated for trips containing movement in a non-closed section of the conveyor shaft.

The conveyor control unit can also be configured to control movement of one or more other elevator cars from among the plurality of elevator cars of the multicar elevator system 100 to move away from a driving area of the selected elevator car. The one or more other elevator cars may be moved for example to another elevator shaft, a reservation shaft, a transfer channel, and/or outside the driving area of the selected elevator car within the same elevator shaft. According to an embodiment of the invention, the conveyor control unit may be configured to dynamically control the movement of the one or more other elevator cars away from the driving area. The dynamical control of the movement of the one or more other elevator cars means that the movement of the other elevator cars is performed during the movement of the selected elevator car, i.e. when the movement of the selected elevator car is in progress. In order to dynamically control the movement of one or more other elevator cars away from the driving area of the selected elevator car, the conveyor control unit can be first configured to obtain a distance between the one or more other elevator cars to be moved away and the selected elevator car during the movement of the selected elevator car. The distance between the one or more other elevators and the selected moving elevator car may be obtained from the elevator car or by the conveyor control unit itself. The elevator cars may comprise one or more sensors to measure its distance to the selected elevator car. The one or more sensors may comprise for example infrared sensor, laser sensor, and/or proximity sensor. Alternatively, the conveyor control unit may be configured to measure the distance based on the locations of the elevator cars. The conveyor control unit can next be configured to define based on the defined distances and moving direction of the selected elevator car, whether there is a need to move one or more other elevator cars away from the driving area of the selected elevator car. If the conveyor control unit defines that one or more elevator cars are within the drive area of the selected elevator car, i.e. that there is a need to move one or more other elevator cars away from the driving area of the selected elevator car, the conveyor control unit can be configured to generate a control signal to said one or more elevator cars to move away from the driving area of the selected elevator car. The control signal may comprise instructions to move away from the driving area of the selected elevator car. The control signal may e.g. refer to a signal carrying information for controlling power generation means of the one or more other elevator cars.

The specific examples provided in the description given above should not be construed as limiting the applicability and/or the interpretation of the appended claims. Lists and groups of examples provided in the description given above are not exhaustive unless otherwise explicitly stated.

## Claims

1. A linear motor conveyor system, **characterized in that** the system comprises:
a conveyor shaft (101),
at least one movable unit (102), such as an elevator car or a motor unit,
an electric linear motor for moving the movable unit comprising at least one linear stator (104) extending in the conveyor shaft and at least one mover (106) coupled to the movable unit (102) and configured to be moved along the linear stator,
wherein the linear stator (104) comprises stator poles implemented without windings, e.g. permanent magnet poles and/or ferromagnetic poles, and
wherein the mover (106) comprises power components and/or windings for interacting with the stator poles to generate propulsion force for moving the movable unit (102) along the linear stator (104).

2. A system according to claim 1, wherein the linear stator (104) does not comprise windings or power components of the electric linear motor.

3. A system according to claim 1 or 2, wherein the mover (106) comprises a drive unit (107), such as a frequency converter, for driving the mover (106) along the stator (104), and/or wherein the drive unit (107) comprises an inverter for generating power signals to the windings of the mover (106) and/or a battery (109).

4. A system according to any previous claim, wherein the linear stator (104) comprises permanent magnet poles, e.g. in the form of halbach arrays, and/or ferromagnetic poles.

5. A system according to any previous claim, wherein the conveyor shaft (101) or at least a section of the conveyor shaft comprises a non-closed section in which the conveyor shaft is open or at least partially open to surroundings of the conveyor shaft or the conveyor shaft section.

6. A system according to any previous claim, wherein the linear stator (104) or a part of the linear stator, e.g. in the non-closed section (210) of the conveyor shaft, is coated in such a way that it is protected against outdoor conditions.

7. A system according to any previous claim, wherein at least a part of the movable units (102) and at least a part of the movers (106) of the movable units are arranged to be essentially waterproof, and/or wherein the essentially waterproof movable units (102) and their movers (106) are configured to be allocated for trips containing movement in a non-closed section (210) of the conveyor shaft.

8. A system according to any previous claim, wherein the linear stator comprises a first linear stator extending in a in a first direction of the conveyor shaft, and a second linear stator extending in a second direction of the conveyor shaft, wherein the first direction and the second direction are different directions, selected from the group of horizontal, inclined and vertical direction.

9. A system according to any previous claim, wherein the conveyor shaft or a conveyor shaft section extends between two buildings, in particular in horizontal or inclined direction, comprising a non-closed section (210) for transferring movable units between the two buildings.

10. A system according to any previous claim, wherein the movable unit, e.g. the drive unit of the movable unit, comprises a movement sensor of movable unit configured to regulate speed of the car and/or to detect an overspeed of the car.

11. A system according to any previous claim, wherein the conveyor shaft (101) or a section of the conveyor shaft, such as a non-closed section (210) of the conveyor shaft, comprises a cover.

12. A system according to any previous claim, wherein the linear motor conveyor system is an elevator system (100, 200) comprising an elevator shaft and an elevator car configured to move in the elevator shaft.

13. A method for controlling a linear motor conveyor system conveyor system, **characterized in that**
the linear motor conveyor system is a linear motor conveyor system according to any claim 1 - 12, wherein a part of the movable units (102) and their movers (106) are arranged to be essentially waterproof,
wherein in the method the essentially waterproof movable units (102) and their movers (106) are allocated for trips containing movement in a non-closed section (210) of the conveyor shaft.

14. A computer program comprising instructions which, when executed by a computer, cause the computer to carry out the method of claim 13.

15. A computer-readable medium comprising the computer program according to claim 14.
